# EUROPEAN PATENT SPECIFICATION

(11) **EP 0 586 456 B1**
(45) Date of publication and mention of the grant of the patent: **04.09.1996**
(21) Application number: 92910672.2
(22) Date of filing: 22.05.1992
(51) Int. Cl.: B01J 19/16, C25D 17/02, B03C 3/41, B01D 53/32

(54) **METHOD FOR PREVENTING EVAPORATION OF A LIQUID FROM A BASIN AND SPREADING OF PARTICULATE MATERIAL CARRIED BY VAPOR DROPS TO THE SURROUNDINGS**
VERFAHREN ZUR VERHINDERUNG DER VERDAMPFUNG VON FLÜSSIGKEITEN VON EINEM BECKEN UND DIE VERTEILUNG IN DIE UMGEBUNG VON IN DEN DAMPFTRÖPFCHEN MITGERISSENEM TEILCHENFÖRMIGEM MATERIAL
PROCEDE POUR EMPECHER L'EVAPORATION DU LIQUIDE D'UN BASSIN ET LA DISPERSION DANS L'ENVIRONNEMENT DES PARTICULES DE MATIERE PORTEES PAR LES GOUTTELETTES DE VAPEUR

(30) Priority: 22.05.1991 FI 912488
(43) Date of publication of application: 16.03.1994
(73) Proprietor: ROXON OY, SF-15860 Hollola (FI)
(72) Inventor: ILMASTI, Veikko, SF-00640 Helsinki (FI)
(74) Representative: Örtenblad, Bertil Tore
(86) International application number: FI9200160
(87) International publication number: WO9220443

(56) References cited:
- AU-A- 53 737
- DE-A- 1 932 074
- US-A- 4 137 612
- DERWENT'S ABSTRACT No. 732 11 D/40; & SU,A,794672 publ. week 8140

## Description

The present invention relates to a method for preventing the evaporation of a liquid from a basin and the spreading of particulate material carried by vapor drops into the surroundings.

In very many places, industries use open basins or conveying canals which contain toxic liquids. Furthermore, since the temperature of the liquid in such a basin is often high, the evaporation is extensive and detrimental to the environment. In anodizing, nickel plating, and other similar processes, heavy metals are spread into the surroundings in vapor drops in toxic clouds. In metal processing, nickel sulfate and sodium sulfate spread into the surroundings, and all of the said substances are highly hazardous to health. Attempts have been made, by means of hoods placed above the basins, to direct the vaporizing gases out from the actual industrial halls, but thereby the problem gases have only been shifted from one place to another. Attempts have also been made to spread floating plastic spherules on the surface of the liquid, but even these do not cover the surface entirely and, owing to the high temperatures, they melt away. It is an object of the invention to eliminate the disadvantages described above. The method according to the invention is characterized in that ion-producing points are used above the liquid surface so that a strong ion field is obtained above the liquid surface.

By means of ionization, the drops which form and condense above the liquid surface and contain the said particles will, immediately upon raising from the surface, arrive in an electric charge field having the same polarity as the said drops have, and therefore they will immediately return to the liquid. This serves to prevent the evaporation of the liquid and the spreading of particulate materials carried by vapor drops into the surroundings. The volume of the liquid in the basin may thus remain almost constant. In the area of the basins it will be possible to inhale clean air without using a mask.

One embodiment of the invention is characterized in that ionization points are installed in the form of a matrix above the liquid surface so that the ions departing from the ionization points will produce a cover over the entire surface of the liquid.

Another embodiment of the invention is characterized in that the ionization points, which are made up of suspended cable ends, are mounted on horizontal rails in such a manner that they can be pushed aside along the rails, away from above the basin, when other work stages are being carried out above the basin, such as placing pieces into the basin or lifting pieces out of the basin by means of a hoist. The hoist may additionally have some simple gripping member which will return the ionization points to above the liquid surface when the hoist moves away from above the basin.

One embodiment of the invention is further characterized in that the ion-producing points are mounted at a distance of 10-150 cm from the liquid surface and that a voltage of 4-160 kV is fed to the ion-producing points. The higher the voltage, the higher above the surface the ionization points can be.

The invention is described below with the help of an example, with reference to the accompanying drawings, in which
Figure 1 depicts a cross section of the basin,
Figure 2 depicts a longitudinal section of the basin,
Figure 3 depicts the transfer of the ionization points to the side of the basin,
Figure 4 depicts a plan view of the basin, and
Figure 5 depicts an ionization point above the liquid surface.

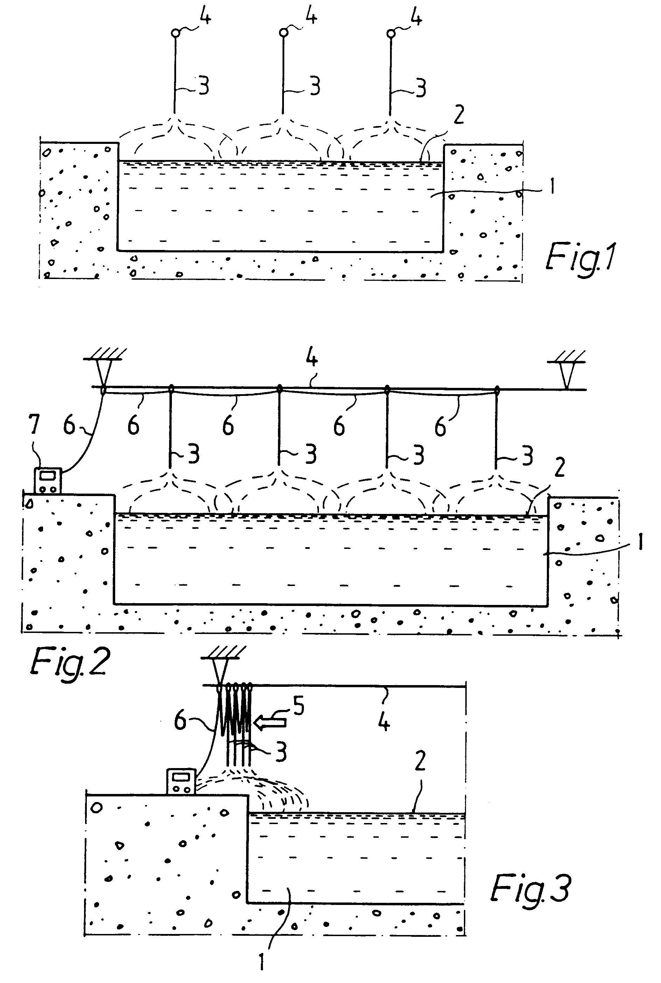

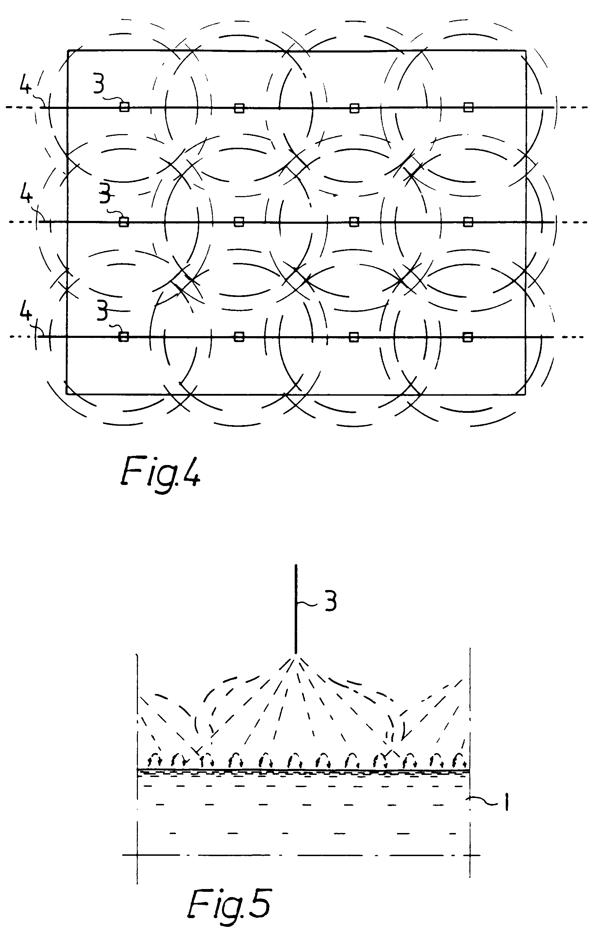

The apparatus used in the method consists of ionization points 3 suspended above the liquid surface 2 in the basin 1. By means of the ionization points 3, an ion field is produced above the liquid surface 2. The ionization points 3 are installed above the liquid surface 2 in the form of a matrix 3 x 4 so that the ion beams departing from the ionization points will cover the entire surface area 2 of the liquid. The ionization points 3, which consist of downwardly suspended cable ends, are mounted on horizontally positioned rails 4 in such a manner that they can be pushed aside along the rails, as is shown in Figure 3, in the manner indicated by arrow 5. All of the ionization points 3 are connected by means of cables 6 to a high-voltage source 7. In Figure 5, the small arrows show how the small particles vaporizing from the surface rise upwards, obtain an electric charge, and are returned to the liquid by means of an ion field of the same polarity. In the metal-processing industry, in which the size of the basins may be, for example, 25 m x 15 m, the ionization points are placed at a distance of approximately 100-150 cm from the liquid surface 2. In this case, voltages which may be 100-160 kV are used in the ionization points.

The operating method according to the invention is suitable for any industry in which it is desired to prevent the evaporation of liquids from basins and the spreading of particulate materials in vapor drops into the surroundings.

## Claims

1. A method for preventing the evaporation of a liquid, for example, from a basin (1) and the spreading of a particulate material in vapor drops into the surroundings, **characterized** in that ion-producing points (3) are used above the liquid surface (2) in such a manner that a strong ion field is obtained above the liquid surface.

2. A method according to Claim 1, **characterized** in that ionization points (3) are mounted above the liquid surface (2) in the form of a matrix, in such a manner that the ions departing from the ionization points (3) will produce a cover over the entire surface area (2) of the liquid.

3. A method according to Claim 1 or 2, **characterized** in that the ionization points (3), which are made up of suspended cable ends, are mounted on horizontally positioned rails (4) in such a manner that they can be pushed along the rails (5) away from above the basin surface (2) when other work stages are being performed above the basin, such as placing pieces in the basin or lifting pieces out of the basin by means of a hoist.

4. A method according to any of the above claims, **characterized** in that the ionization points (3) are mounted at a distance of 10-150 cm from the liquid surface (2).

5. A method according to any of the above claims, **characterized** in that a voltage of 4-160 kV is fed to the ionization points (3).

## Patentansprüche

1. Verfahren zur Verhinderung der Verdampfung einer Flüssigkeit, beispielsweise aus einem Becken (1), und dem Verteilen von teilchenförmigem Material in den Dampftröpfchen in die Umgebung, gekennzeichnet dadurch, daß Ionen erzeugende Punkte (3) oberhalb der Flüssigkeitsoberfläche (2) derart verwendet werden, daß man ein starkes Ionenfeld oberhalb der Flüssigkeitsoberfläche erhält.

2. Verfahren nach Anspruch 1, dadurch gekennzeichnet, daß die Ionisationspunkte (3) oberhalb der Flüssigkeitsoberfläche (2) in Form einer Matrix montiert sind, derart, daß die Zonen, die von den Ionisationspunkten (3) abstrahlen, eine Abdeckung über das gesamte Oberflächengebiet (2) der Flüssigkeit bilden.

3. Verfahren nach den Ansprüchen 1 oder 2, dadurch gekennzeichnet, daß die Ionisationspunkte (3), die aus herabhängenden Kabelenden gefertigt sind, auf horizontal angeordneten Schienen (4) derart montiert sind, daß sie entlang (5) der Schienen von der Beckenoberfläche (2) weggeschoben werden können, wenn andere Arbeitsschritte über dem Becken durchgeführt werden, wie beispielsweise das Plazieren von Stücken im Becken oder das Herausheben von Stücken aus dem Becken mittels eines Hebezeuges.

4. Verfahren nach einem der obigen Ansprüche, dadurch gekennzeichnet, daß die Ionisationspunkte (3) in einer Entfernung von 10 - 150 cm von den Flüssigkeitsoberfläche (2) entfernt montiert sind.

5. Verfahren nach einem der obigen Ansprüche, dadurch gekennzeichnet, daß eine Spannung von 4 - 160 kV den Ionisationspunkten (3) zugeführt wird.

## Revendications

1. Procédé pour empêcher l'évaporation d'un liquide, par exemple contenu dans un bassin (1), et la dispersion dans l'environnement de particules de matière via les gouttelettes de vapeur, caractérisé en ce que des pointes (3) productrices d'ions sont disposées au-dessus de la surface du liquide (2) de manière à créer un puissant champ d'ions au-dessus de la surface du liquide.

2. Procédé selon la revendication 1, caractérisé en ce que les pointes d'ionisation (3) sont montées au-dessus de la surface (2) du liquide de façon à former une matrice, de telle sorte que les ions partant des pointes d'ionisation (3) couvrent toute la surface (2) du liquide.

3. Procédé selon la revendication 1 ou 2, caractérisé en ce que les pointes d'ionisation (3) qui sont constituées par des extrémités de câbles suspendus, sont montées sur des rails (4) disposés horizontalement afin de pouvoir être déplacées le long des rails (5) et éloignées du dessus de la surface (2) du bassin en vue de réaliser d'autres étapes de traitement au-dessus du bassin, telles que la mise en place de pièces dans le bassin ou le soulèvement de pièces en dehors du bassin au moyen d'un treuil.

4. Procédé selon l'une quelconque des revendications précédentes, caractérisé en ce que les pointes d'ionisation (3) sont montées à une distance de 10 à 150 cm de la surface (2) du liquide.

5. Procédé selon l'une quelconque des revendications précédentes, caractérisé en ce qu'une tension de 4 à 160 kV est appliquée aux pointes d'ionisation (3).
